# EUROPÄISCHE PATENTANMELDUNG

(11) **EP 3 210 827 A1**
(43) Veröffentlichungstag der Anmeldung: **30.08.2017**
(21) Anmeldenummer: 17157560.8
(22) Anmeldetag: 23.02.2017
(51) Int. Cl.: B60Q 3/64, B60Q 3/74, F21V 8/00, F21S 8/10

(54) **LEUCHTE FÜR KRAFTFAHRZEUGE**

(30) Priorität: 25.02.2016 DE 202016100986 U
(71) Anmelder: Automotive Lighting Reutlingen GmbH, 72762 Reutlingen (DE)
(72) Erfinder: Gebauer, Matthias, 72770 Reutlingen (DE)
(74) Vertreter: DREISS Patentanwälte PartG mbB

(57) **Zusammenfassung**

Die Erfindung betrifft eine Leuchte für ein Kraftfahrzeug mit mindestens einem Leuchtmittel (22) sowie einem flächigen Lichtleiter (14) mit mindestens einer Lichteinkoppelfläche (28) und wenigstens einer, davon beabstandeten, an einer ersten Flachseite des Lichtleiters (14) vorgesehenen Lichtauskoppelfläche (32), wobei an einer zweiten Flachseite des Lichtleiters (14), die der Lichtauskoppelfläche (32) gegenüber liegt, Auskoppelelemente (30) angeordnet sind, an denen in dem flächigen Lichtleiter (14) geführte Lichtstrahlen (20) zur Lichtauskoppelfläche (32) umgelenkt werden, so dass sie aus dem flächigen Lichtleiter (14) austreten, wobei das Leuchtmittel (22) mit einem stabförmigen Lichtleiter (12) zusammenwirkt und das Licht des Leuchtmittels (22) in den stabförmigen Lichtleiter (12) an einer Lichteintrittsfläche (11) des stabförmigen Lichtleiters (12) eintritt und diesen über eine an der Umfangsfläche vorgesehene Lichtaustrittsfläche (26) wieder verlässt, um in die Lichteinkoppelfläche (28) des flächigen Lichtleiters (14) eingekoppelt zu werden.

## Beschreibung

Die vorliegende Erfindung betrifft eine Leuchte für Kraftfahrzeuge mit mindestens einem Leuchtmittel sowie einem flächigen Lichtleiter mit mindestens einer Lichteinkoppelfläche und wenigstens einer, davon beabstandeten, an einer ersten Flachseite des Lichtleiters vorgesehenen Lichtauskoppelfläche, wobei an einer zweiten Flachseite des Lichtleiters, die der Lichtauskoppelfläche gegenüberliegt, Auskoppelelemente angeordnet sind, an denen im dem flächigen Lichtleiter geführte Lichtstrahlen zur Lichtauskoppelfläche umgelenkt werden, so dass sie aus dem Lichtleiter austreten.

Eine solche Leuchte ist aus der DE 10 2005 046 538 A1 bekannt.

Beleuchtungseinrichtungen für Kraftfahrzeuge können als Scheinwerfer oder als Leuchten ausgebildet sein. Scheinwerfer sind im Frontbereich eines Fahrzeugs angeordnet und dienen primär der aktiven Ausleuchtung eines Bereichs vor dem Fahrzeug, z. B. in Form einer Abblend-, Fern- oder Nebel-Lichtverteilung. Leuchten dienen primär dazu, andere Verkehrsteilnehmer auf die Gegenwart eines Fahrzeugs und gegebenenfalls sein Verhalten aufmerksam zu machen. So werden Bugleuchten im Frontbereich des Fahrzeugs beispielsweise zur Erzeugung von Tagfahrlicht, Blinklicht oder Positionslicht und Heckleuchten im Heckbereich des Fahrzeugs beispielsweise als Bremslicht, Rückleuchte, Rückfahrlicht oder Blinklicht eingesetzt. In eine Leuchte sind häufig mehrere Leuchtenfunktionen integriert. Ein homogenes helles Erscheinungsbild der Leuchte, insbesondere des Lichtaustrittsbereichs der Leuchte, ist aus gestalterischen Aspekten erwünscht.

Neben Leuchten, die am Fahrzeugäußeren angebracht sind, sind darüber hinaus Leuchten im Fahrzeuginneren vorgesehen, die dazu dienen, gewisse Bereiche des Fahrzeugs, z. B. auch nur temporär zu erhellen, um einem Fahrzeugführer oder weiteren Fahrzeuginsassen eine Orientierung im Fahrzeug zu erleichtern.

Aus der DE 10 2005 046 538 A1 ist eine Leuchte mit einem flächigen Lichtleiter bekannt, wobei die Leuchte als Innenleuchte für ein Kraftfahrzeug ausgebildet ist und wobei Leuchtmittel vorgesehen sind, deren Licht in einen flächigen Lichtleiter eingekoppelt wird. Der Lichtleiter weist eine Lichtauskoppelfläche sowie eine gegenüberliegende mit Auskoppelelementen versehene zweite Flachseite auf. Das Licht tritt dabei über eine der Flachseiten des flächigen Lichtleiters aus.

Es kann vorgesehen sein, dass mehrere Leuchtmittel mit dem flächigen Lichtleiter zusammenwirken und Licht in den flächigen Lichtleiter einkoppeln. Dabei ist vorgesehen, dass zwischen den Lichtauskoppelelementen Bereiche der Oberfläche des Lichtleiters vorhanden sind, die die Auskoppelelemente voneinander beabstanden und diese Oberflächenbereiche unter einem Neigungswinkel Δ zu einer Lichtaustrittsfläche angeordnet sind. Der Neigungswinkel wird dabei so gewählt, dass die in dem Lichtleiter geführten Lichtstrahlen an dem Oberflächenbereich unter Ausnutzung der Totalreflektion zu einem in Hauptausbreitungsrichtung hinter dem betreffenden Oberflächenbereich befindlichen Auskoppelelement abgelenkt und von dort unter einem Winkel auf die Lichtaustrittsfläche projiziert werden, der so steil ist, dass die Lichtstrahlen an der Lichtaustrittsfläche aus dem Lichtleiter ausgekoppelt werden.

Nachteilig bei der bekannten Leuchte ist, dass es durch die recht punktuelle Einkopplung des Lichts aus dem Leuchtmittel in den Lichtleiter zu inhomogenen Stellen in der Ausleuchtung kommt.

Aufgabe der vorliegenden Erfindung ist es daher, eine Leuchte bereitzustellen, die ein möglichst homogenes Erscheinungsbild generiert.

Diese Aufgabe wird mit den Merkmalen des Anspruchs 1 gelöst. Die erfindungsgemäße Leuchte unterscheidet sich von dem eingangs genannten Stand der Technik dadurch, dass das Leuchtmittel mit einem stabförmigen Lichtleiter zusammenwirkt und das Licht des Leuchtmittels in den stabförmigen Lichtleiter an einer Lichteintrittsfläche des stabförmigen Lichtleiters eintritt und diesen über eine an der Umfangsfläche vorgesehene Lichtaustrittsfläche wieder verlässt, um in die Lichteinkoppelfläche des flächigen Lichtleiters eingekoppelt zu werden. Dabei soll unter einem stabförmigen Lichtleiter ein solcher Lichtleiter verstanden werden, der eine Längserstreckung aufweist, die mindestens dem Doppelten seiner größten Abmessung in Querrichtung entspricht. Insbesondere ist der stabförmige Lichtleiter sehr viel länger als seine größte Erstreckung in Querrichtung. Der stabförmige Lichtleiter kann dabei im Querschnitt eine runde, aber auch eine hiervon abweichende Form, z. B. unregelmäßige oder auch polygone Form, aufweisen. Insbesondere können Bereiche der Umfangsfläche elliptisch ausgebildet sein, während die einer elliptischen Fläche gegenüberliegende Seite als ebene Fläche gestaltet sein kann. Vorzugsweise weist der stabförmige Lichtleiter mindestens zwei Stirnflächen auf. Es ist jedoch auch möglich, dass der stabförmige Lichtleiter Verzweigungen (Arme) aufweist.

Unter einem flächigen Lichtleiter soll eine Gestaltung verstanden werden, bei der mindestens zwei Flachseiten vorgesehen sind, wobei die Flachseiten, die die Lichtauskoppelfläche bzw. die mit Auskoppelelementen versehene Fläche umfassen, vorzugsweise die Seiten des flächigen Lichtleiters sind, die die größte flächenmäßige Erstreckung aufweisen.

Die übrigen Flächen (Schmalseiten) können vorzugsweise lediglich als Ränder des flächigen Lichtleiters betrachtet werden.

Dabei ist es besonders bevorzugt, wenn die Lichtaustrittsfläche des stabförmigen Lichtleiters bezüglich ihrer Erstreckung im Wesentlichen der Erstreckung der Lichteintrittsfläche des flächigen Lichtleiters entspricht. Insbesondere gilt dies bezüglich der Erstreckung in Längsrichtung des stabförmigen Lichtleiters.

Hierdurch wird erreicht, dass eine möglichst homogene Lichteinkopplung in den flächigen Lichtleiter über die gesamte Lichteinkoppelfläche erfolgt. Besonders bevorzugt kann dabei weiterhin vorgesehen sein, dass die Lichteinkoppelfläche des flächigen Lichtleiters sich über die gesamte, die Lichteinkoppelfläche aufweisende Seite des flächigen Lichtleiters erstreckt. Vorzugsweise jedoch über wenigstens 75%, weiter vorzugsweise über mindestens 90% hiervon.

Sowohl der stabförmige als auch der flächige Lichtleiter sind bevorzugt aus einem transparenten Kunststoffmaterial ausgebildet sein, wobei je nach Gestaltung auch farbige Kunststoffe eingesetzt werden können. Die Lichtstrahlen, die durch das Leuchtmittel in den stabförmigen Lichtleiter eingekoppelt werden, werden in diesen geführt und an den Lichtauskoppelelementen des stabförmigen Lichtleiters, sogenannten Prismen, in Richtung der Lichtaustrittsfläche des stabförmigen Lichtleiters umgelenkt. Dabei strahlt der stabförmige Lichtleiter über seine gesamte Lichtaustrittsfläche homogen ab. Dies kann mit bekannten Methoden erreicht werden, wie beispielsweise der Anpassung der Pitchlänge, der Prismenhöhe sowie Prismenbreite und - länge sowie des Prismenwinkels etc. Dabei tritt das Licht vorzugsweise über eine der Stirnseiten in den stabförmigen Lichtleiter ein. An den Prismen oder Auskoppelelementen wird das Licht dann in Richtung der Lichtaustrittsfläche des stabförmigen Lichtleiters umgelenkt, die mit der Lichteinkoppelfläche des flächigen Lichtleiters zusammenwirkt, und zwar dergestalt, dass das Licht möglichst verlustfrei in den flächigen Lichtleiter eintritt. Die Lichtstrahlen werden dann im flächigen Lichtleiter geführt, bis sie auf ein Auskoppelelement im flächigen Lichtleiter treffen und durch dieses in Richtung der Lichtauskoppelfläche umgelenkt werden und dann die Leuchte verlassen. Dabei kann das vom stabförmigen Lichtleiter in den flächigen Lichtleiter eingekoppelte Licht sich in diesen ausbreiten.

Nach einer ersten bevorzugten Ausführungsform können die Lichtquellen an einer oder beiden Stirnseiten des stabförmigen Lichtleiters angeordnet sein.

Hierdurch wird erreicht, dass mit möglichst wenig Leuchtmitteln eine möglichst gute und gleichmäßige Lichtabgabe über die Lichtaustrittsfläche des stabförmigen Lichtleiters erreicht werden kann.

Weiter bevorzugt kann vorgesehen sein, dass die Lichtauskoppelelemente in vertikale und/oder horizontale Richtung gekippt und/oder gewölbt angeordnet sind. Durch die Kippung der Auskoppelelemente (oder Auskoppelprismen genannt), beispielsweise um eine vertikale Achse, wird erreicht, dass das reflektierte Licht nach dem Austritt aus dem flächigen Lichtleiter parallel zur Fahrtrichtung verläuft. Der Prismenwinkel ist dabei z. B. im vertikalen Schnitt bei eingebauter Leuchte so gekippt, dass das Licht den Lichtleiter in Fahrtrichtung verlässt.

Dabei kann über weitere Methoden erreicht werden, dass die Fläche homogen ausgeleuchtet wird, beispielsweise durch Anpassung der Pitchlänge, der Prismenhöhe, -breite und -länge sowie Prismenwinkel, etc.

Darüber hinaus kann vorgesehen sein, dass die Auskoppelelemente in einer oder beiden Richtungen (hier ebenfalls vertikal und horizontal) gewölbt sind, um eine gewünschte Streuung in vertikaler und horizontaler Richtung zu erzeugen.

Dabei können die Auskoppelelemente analog einer bei Rückleuchten üblichen Gestaltung erzeugt hergestellt werden, indem im Werkzeug jedes Prisma einzeln als Stift hergestellt und dann die Stifte zu einer Fläche zusammengesetzt werden. Diese Fläche kann dann z. B. galvanisch abgeformt und diese Form in das Werkzeug eingebaut werden. Eine entsprechende Technik ist in der DE 600 00945 T2 beschrieben, wobei die Auskoppelelemente mit Metallstiften nachgebildet werden, die entsprechend der Form der Auskoppelelemente gestaltet sind.

Die Auskoppelelemente sowohl im stabförmigen als auch im flächigen Lichtleiter können sowohl als ebene Flächen, aber auch zylindrisch oder kissenförmig ausgebildet sein bezüglich ihrer Auskoppelflächen.

Insbesondere kann der flächige Lichtleiter gewölbt ausgebildet sein, insbesondere so, dass die beiden Flachseiten, die die Lichtauskoppelfläche und die gegenüberliegende Fläche bilden, gewölbt sind. Hierdurch kann der flächige Lichtleiter besonders gut an die jeweilige Einbausituation angepasst werden. Grundsätzlich ist es auch möglich, den flächigen Lichtleiter in beliebiger Form auszugestalten, insbesondere so, dass er sich in mehrere Lichtflächen aufteilt.

Der Abstand zwischen der Lichtauskoppelfläche und der gegenüberliegenden Flachseite kann über die Länge des Lichtleiters gemessen von der Lichteintrittsfläche, die an einer Schmalseite des flächigen Lichtleiters angeordnet ist, bis zur gegenüberliegenden Schmalseite variabel ist. Insbesondere kann vorgesehen sein, dass ausgehend von der Lichteinkoppelfläche zur gegenüberliegenden Seite sich der Abstand zwischen den beiden Flachseiten verringert, d. h., der Abstand zwischen den beiden Flachseiten im Bereich der Lichteinkoppelfläche am größten ist und die beiden Flachseiten dann aufeinander zu laufen.

Insbesondere kann auch vorgesehen sein, dass je nach gewünschter Anordnung am Kraftfahrzeug die Lichtaustrittsfläche gegenüber der Vertikalen und/oder der Horizontalen geneigt angeordnet sein kann und insbesondere die Lichtauskoppelfläche in einem von 90° abweichenden Winkel zur Lichtabstrahlrichtung verläuft.

Je nach gewünschter Lichtabstrahlung kann vorgesehen sein, dass eine oder mehrere LEDs als Leuchtmittel eingesetzt werden. LEDs bieten dabei den Vorteil einer nur geringen Wärmeentwicklung bei langer Lebensdauer und gleichzeitig guter Lichtabstrahlung, wobei auch vorgesehen sein kann, farbige LEDs vorzusehen und insbesondere mehrere LEDs als Leuchtmittel vorzusehen, die jeweils verschiedene Farben aufweisen, so dass die Leuchte je nach geschaltetem und lichtabstrahlendem Leuchtmittel eine verschiedene Farbabstrahlung bereitstellt.

Auf diese Weise kann besonders vorteilhaft und einfach eine flächige Leuchte realisiert werden, die je nach gewünschter Signalwirkung in verschiedener Farbe erscheint.

Besonders bevorzugt kann vorgesehen sein, dass die Lichtaustrittsfläche des stabförmigen Lichtleiters elliptisch geformt ist, um das Licht zu kollimieren.

Darüber hinaus ist auch vorteilhaft vorsehbar, dass die Leuchtmittel gedimmt und/oder einzeln geschaltet werden können. Beide Lichtleiter, sowohl der stabförmige als auch der flächige Lichtleiter, können im Raum dreidimensional gekrümmt verlaufen, wobei jedoch die Lichteinkoppelfläche des flächigen Lichtleiters stets mit der Lichtaustrittsfläche des stabförmigen Lichtleiters in Überbedeckung gebracht ist.

Somit ist es auch möglich, mit einer einzigen Leuchte mehrere Leuchtenfunktionen zu realisieren. So kann beispielsweise in einer Heckleuchte ein rot leuchtendes Rücklicht mit einem gelb leuchtenden Blinklicht und einem weiß leuchtenden Rückfahrlicht kombiniert werden, wobei je nach gewünschter Leuchtenfunktion verschiedene Leuchtmittel ihr Licht in den stabförmigen Lichtleiter einstrahlen können. Die verschiedenen Leuchtmittel, insbesondere Leuchtdioden (LED) können an einer gemeinsamen Lichteinkoppelfläche angeordnet sein; sie können aber auch an jeweils einer Lichteinkoppelfläche eines Arms des stabförmigen Lichtleiters angeordnet sein. Alternativ ist es möglich, dass eine einzige Lichtquelle als LED-Chip ausgebildet ist, die durch entsprechende Ansteuerung verschieden farbiges Licht aussenden kann.

Die Verwendung einer LED ist auch insoweit vorteilhaft, da Leuchtdioden lediglich kleine Außenabmessungen aufweisen, so dass auch der stabförmige Lichtleiter bzw. zumindest die Lichteintrittsfläche des stabförmigen Lichtleiters, lediglich einen geringen Querschnitt aufweisen müssen. Zur Fokussierung des von einer Leuchtdiode ausgesandten Lichts auf die Lichteintrittsfläche ist es möglich, im Bereich der Leuchtdiode beispielsweise Reflektoren oder Vorsatzoptiken vorzusehen.

Sofern mehrere Einkoppelarme des stabförmigen Lichtleiters vorgesehen sind, weist jeder Arm vorzugsweise eine Lichteintrittsfläche an seinem freien Ende auf. Die einzelnen Arme werden dann im weiteren Verlauf des Lichtleiters zu einem gemeinsamen Lichtleiter zusammengeführt. Die Lichtaustrittsfläche ist bevorzugt erst im Bereich des gemeinsamen stabförmigen Lichtleiters angeordnet. Damit kann beispielsweise die Lichtstärke im zusammengeführten Teil des Lichtleiters verstärkt werden.

Darüber hinaus kann es auch vorgesehen sein, die Lichteintrittsfläche räumlich von der Lichtaustrittsfläche zu beabstanden, so dass das Licht durch die Leuchtmittel in den stabförmigen Lichtleiter eingekoppelt wird und in diesem über eine definierte vorgegebene Strecke ohne Lichtauskopplung bis zur Lichtaustrittsfläche geführt ist, wobei das Licht im Lichtleiter jeweils totalreflektiert wird und dann erst im Bereich der Lichtaustrittsfläche auf entsprechende Auskoppelelemente trifft, die es in Richtung der Lichtaustrittsfläche umlenken.

Weitere Vorteile ergeben sich aus der nachfolgenden Beschreibung und den beigefügten Figuren.

Ausführungsbeispiele der Erfindung sind in den Figuren dargestellt und werden in der nachfolgenden Beschreibung näher erläutert.

Es zeigen, jeweils in schematischer Form:
- Figur 1a, b: ein Ausführungsbeispiel einer erfindungsgemäßen Leuchte in einem vertikalen Querschnitt bzw. einem horizontalen Querschnitt;
- Figur 2a, b: eine Ansicht einer erfindungsgemäßen Leuchte sowie einer vergrößerten Darstellung der Auskoppelelemente,
- Figur 3: eine Aufsicht auf die erfindungsgemäße Leuchte in einer ersten Ebene,
- Figur 4: eine Aufsicht auf die erfindungsgemäße Leuchte in einer zweiten Ebene und
- Figur 5: eine erfindungsgemäße Leuchte.

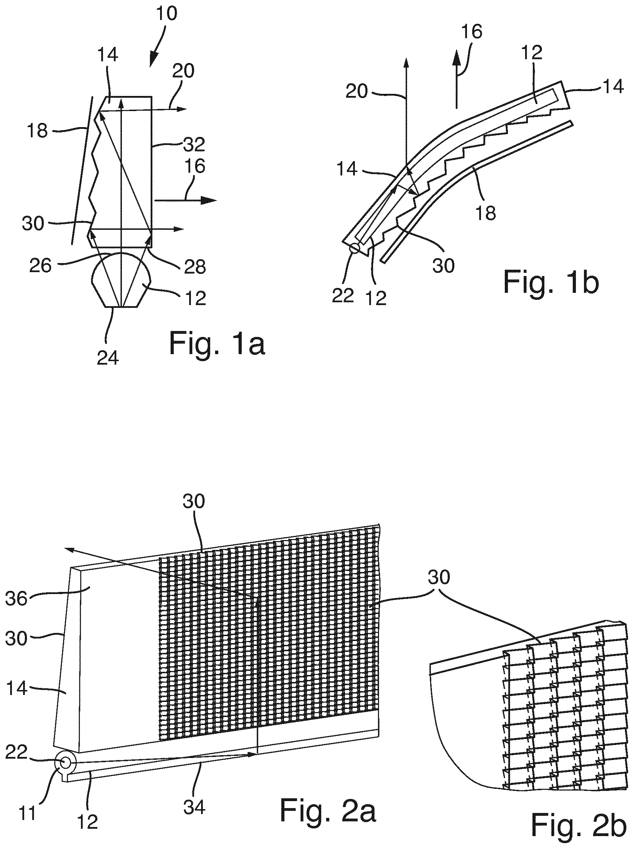

Figur 1 zeigt eine schematische Darstellung einer erfindungsgemäßen Leuchte in der Abbildung a) in einem vertikalen Querschnitt und in Abbildung b) in einem horizontalen Querschnitt. Die Leuchte ist dabei in ihrer Gesamtheit mit dem Bezugszeichen 10 versehen und umfasst einen stabförmigen Lichtleiter 12 sowie einen flächigen Lichtleiter 14. Die Lichtabstrahlrichtung ist mit dem Bezugszeichen 16 gekennzeichnet, wobei diese hier der Fahrtrichtung entspricht. Darüber hinaus ist ein Reflektor 18 vorgesehen, der entgegen der Lichtaustrittsrichtung betrachtet hinter dem flächigen Lichtleiter 14 liegt.

Die Lichtstrahlen sind mit dem Bezugszeichen 20 versehen. Die Einkopplung des Lichts erfolgt mittels eines Leuchtmittels 22, hier in Form einer LED, die in der Darstellung 1b gezeigt ist. Die Einkopplung erfolgt in den stabförmigen Lichtleiter 12 über eine Lichteintrittsfläche 11, wobei das Licht im Lichtleiter 12 geführt ist, bis es auf Auskoppelelemente im stabförmigen Lichtleiter 12 trifft, die an einer Fläche 24 des stabförmigen Lichtleiters angeordnet sind, die einer Lichtaustrittsfläche 26 des stabförmigen Lichtleiters gegenüberliegt. Durch die Lichtauskoppelelemente an der Fläche 24 wird das Licht in Richtung der Lichtauskoppelfläche 26 des stabförmigen Lichtleiters 12 umgelenkt und tritt aus diesem aus, wobei es gleichzeitig in eine Lichteinkoppelfläche 28 des flächigen Lichtleiters 14 eintritt. Dabei wird das Licht so lange im flächigen Lichtleiter 14 geführt, bis es auf ein Auskoppelelement 30 des flächigen Lichtleiters trifft, das die Lichtstrahlen so umlenkt, dass sie auf eine Lichtauskoppelfläche 32 des flächigen Lichtleiters umgelenkt werden und durch diese hindurch austreten. Die Führung der Lichtstrahlen 20 in den Lichtleitern ist mit Pfeilen gekennzeichnet.

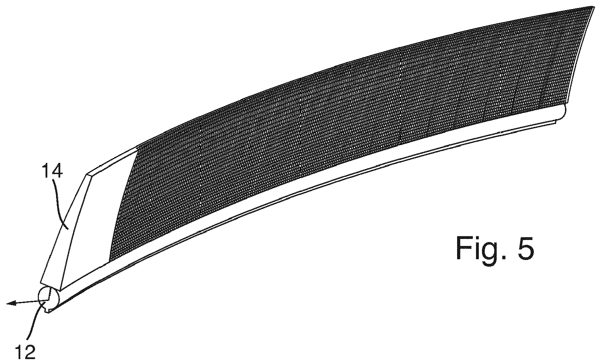

Dabei können sowohl der stabförmige Lichtleiter 12 als auch der flächige Lichtleiter 14 sowohl der bezüglich der Horizontalen als auch der Vertikalen gekrümmt sein, wie sich insbesondere aus der dreidimensionalen perspektivischen Darstellung in Figur 5 entnehmen lässt.

Figur 2 zeigt in den Darstellungen a) und b) die Lichtleiteranordnung, wobei die Auskoppelelemente 34 im stabförmigen Lichtleiter ersehen werden können. Der flächige Lichtleiter 14 weist dabei einen Lichtauskoppelbereich 32 auf sowie weitere Bereiche 36, die nicht der Lichtauskopplung dienen. Dabei ist der stabförmige Lichtleiter 12 bezüglich seiner Lichtaustrittsfläche 26 so mit dem flächigen Lichtleiter 14 zusammenwirkend ausgebildet, dass lediglich im Bereich der Lichtauskoppelfläche 32 des flächigen Lichtleiters 14 eine Auskopplung von Lichtstrahlen aus dem stabförmigen Lichtleiter 12 erfolgt.

Die Anordnung der Auskoppelelemente 30 des flächigen Lichtleiters kann insbesondere in Figur 2b) ersehen werden.

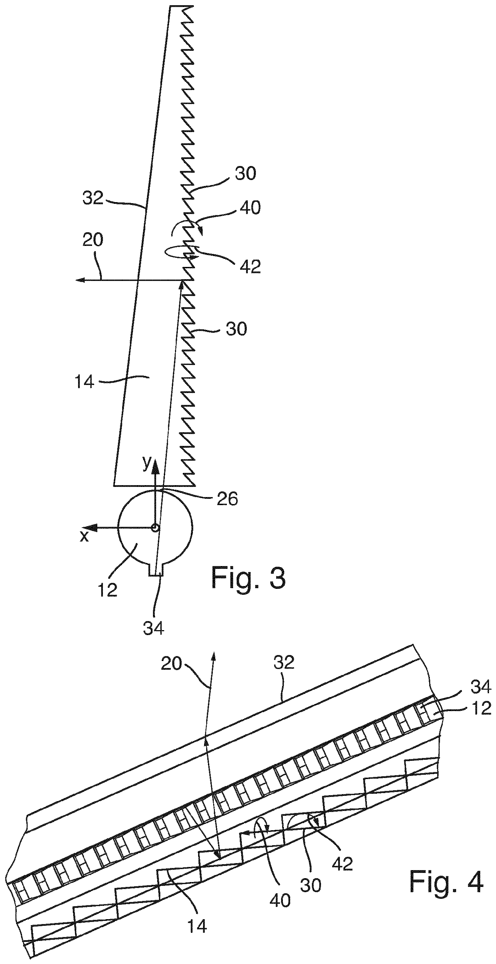

In den Figuren 3 und 4 ist die horizontale bzw. vertikale Verkippung der Auskoppelelemente 30 des flächigen Lichtleiters 14 ersichtlich.

So ist mit dem Pfeil 40 die vertikale Verkippung und mit dem Pfeil 42 die horizontale Verkippung bezeichnet. Durch die Verkippung der Auskoppelelemente 30 wird erreicht, dass ein Lichtstrahl 20 in der gewünschten Richtung aus dem Lichtleiter 14 ausgekoppelt wird.

Insbesondere kann hier die Lichtauskoppelrichtung mit der Fahrtrichtung zusammenfallen.

## Patentansprüche

1. Leuchte für ein Kraftfahrzeug mit mindestens einem Leuchtmittel (22) sowie einem flächigen Lichtleiter (14) mit mindestens einer Lichteinkoppelfläche (28) und wenigstens einer, davon beabstandeten, an einer ersten Flachseite des Lichtleiters (14) vorgesehenen Lichtauskoppelfläche (32), wobei an einer zweiten Flachseite des Lichtleiters (14), die der Lichtauskoppelfläche (32) gegenüber liegt, Auskoppelelemente (30) angeordnet sind, an denen in dem flächigen Lichtleiter (14) geführte Lichtstrahlen (20) zur Lichtauskoppelfläche (32) umgelenkt werden, so dass sie aus dem flächigen Lichtleiter (14) austreten, **dadurch gekennzeichnet, dass** das Leuchtmittel (22) mit einem stabförmigen Lichtleiter (12) zusammenwirkt und das Licht des Leuchtmittels (22) in den stabförmigen Lichtleiter (12) an einer Lichteintrittsfläche (11) des stabförmigen Lichtleiters (12) eintritt und diesen über eine an der Umfangsfläche vorgesehene Lichtaustrittsfläche (26) wieder verlässt, um in die Lichteinkoppelfläche (28) des flächigen Lichtleiters (14) eingekoppelt zu werden.

2. Leuchte nach Anspruch 1, **dadurch gekennzeichnet, dass** das Leuchtmittel (22) an einer oder beiden Stirnseiten des stabförmigen Lichtleiters (12) angeordnet ist.

3. Leuchte nach einem der vorangehenden Ansprüche, **dadurch gekennzeichnet, dass** der stabförmige Lichtleiter (12) auf einer der Lichtaustrittsfläche (26) gegenüberliegenden Seite (24) seiner Umfangsfläche Auskoppelelemente (34) aufweist, die das in dem stabförmigen Lichtleiter (12) geführte Licht in Richtung der Lichtaustrittsfläche (26) des stabförmigen Lichtleiters (12) umlenken.

4. Leuchte nach Anspruch 1 oder 2, **dadurch gekennzeichnet, dass** die Lichtauskoppelelemente (30, 34) des flächigen Lichtleiters (14) und/oder des stabförmigen Lichtleiters (12) in vertikaler und /oder horizontaler Richtung gekippt und/oder gewölbt angeordnet sein können.

5. Leuchte nach einem der vorangehenden Ansprüche, **dadurch gekennzeichnet, dass** der flächige Lichtleiter (14) insbesondere bezüglich der Lichtauskoppelfläche (32) gewölbt ausgebildet ist.

6. Leuchte nach einem der vorangehenden Ansprüche, **dadurch gekennzeichnet, dass** als Leuchtmittel (22) eine oder mehrere LED eingesetzt ist.

7. Leuchte nach einem der vorangehenden Ansprüche, **dadurch gekennzeichnet, dass** der stabförmige Lichtleiter (12) mehrere stabförmige Einkoppelarme aufweist.

8. Leuchte nach einem der vorangehenden Ansprüche, **dadurch gekennzeichnet, dass** die Lichtaustrittsfläche (26) des stabförmigen Lichtleiters (12) elliptisch ausgebildet sein kann.
